Europäisches Patentamt

(19) European Patent Office

Office européen des brevets

(11) Publication number: **0 178 685**
**B1**

(12) **EUROPEAN PATENT SPECIFICATION**

(45) Date of publication of patent specification: **25.07.90**

(51) Int. Cl.⁵: **G 11 B 5/70,** G 11 B 5/66, H 01 F 10/14

(21) Application number: **85113267.0**

(22) Date of filing: **18.10.85**

(54) Perpendicular magnetic recording medium and method of making same.

(30) Priority: **19.10.84 JP 218251/84**

(43) Date of publication of application:
**23.04.86 Bulletin 86/17**

(45) Publication of the grant of the patent:
**25.07.90 Bulletin 90/30**

(84) Designated Contracting States:
**DE FR GB NL**

(56) References cited:
**EP-A-0 089 609**

**PATENT ABSTRACTS OF JAPAN, vol. 8, no. 129
(P-280)1566r, 15th June 1984; & JP - A - 59 033
630 (MATSUSHITA DENKI SANGYO K.K.) 23-02-
1984**

**PATENT ABSTRACTS OF JAPAN, vol. 7, no. 152
(P-208)1297r, 5th July 1983; & JP - A - 58 062 827
(MATSUSHITA DENKI SANGYO K.K.) 14-04-1987**

(73) Proprietor: **SONY CORPORATION**
**7-35 Kitashinagawa 6-Chome Shinagawa-ku
Tokyo 141 (JP)**

(72) Inventor: **Tanaka, Toshikazu c/o Sony
Corporation
7-35 Kitashinagawa 6-chome
Shinagawa-ku Tokyo (JP)**
Inventor: **Nakamura, Etsuko c/o Sony
Corporation
7-35 Kitashinagawa 6-chome
Shinagawa-ku Tokyo (JP)**
Inventor: **Katahira, Taku c/o Sony Corporation
7-35 Kitashinagawa 6-chome
Shinagawa-ku Tokyo (JP)**

(74) Representative: **TER MEER - MÜLLER -
STEINMEISTER & PARTNER
Mauerkircherstrasse 45
D-8000 München 80 (DE)**

**Description**

Background of the invention

Field of the invention

This invention relates to a perpendicular magnetic recording medium comprising a nonmagnetic base of a material stable at a temperature of 220°C and higher, a low coercive force layer of an iron-nickel alloy vapor phase deposited on said nonmagnetic base at a temperature of said base of at least 220°C, and a magnetic recording layer overlying said low coercive force layer and having an easy axis of magnetization perpendicular to said nonmagnetic base and a method of preparing the same.

Description of the prior art

The most common type of magnetic recording medium used in computer memories or as a recording medium for video or audio signals makes use of horizontal recording or in-plane recording on a magnetic recording layer coated or otherwise deposited on a nonmagnetic substrate. This type of recording has the disadvantage that as the wavelength of the recording signals becomes shorter, i.e., the recording density becomes higher, there is a larger demagnetization occurring in the recording medium with the result that the magnetic flux density and hence the playback output are lowered.

There has heretofore been suggested a perpendicular magnetic recording system in which recording takes place through magnetization along the thickness of the recording layer of the magnetic recording medium. In the perpendicular magnetic recording system, the shorter the recording wavelength, the lower the demagnetization. Thus, this type of system would be preferable to the in-plane magnetization where short wavelength, high density recording is required.

One example of perpendicular recording and media used therein will be found in U.S. Patent No. 4,210,946 to Iwasaki et al. This patent describes a magnetic recording medium suitable for use in a single-pole type magnetic recording transducer operating in a perpendicular magnetization mode and comprising a nonmagnetic base on which there is supported a layer of low coercive force material. On top of the low coercive force material there is a magnetic recording layer which is formed of an alloy composed mainly of chromium and cobalt and has an easy axis of magnetization perpendicular to the surface of the magnetic recording layer. The thickness of the magnetic recording layer is no greater than 3.0 microns. The low coercive force material has a coercive force no greater than 1/5 of the coercive force of the magnetic recording layer, and the thickness of the low coercive force layer is greater than 100 nm (0.1 micron).

Another example of perpendicular recording record media will be found in U.S. Patent No. 4,287,544 to Lazzari. This patent describes a carrier comprising a nonmagnetic substrate on which there is applied a magnetic data layer of an anisotropic magnetic material having its axis of easy magnetization perpendicular to the surface of the nonmagnetic substrate. This data layer includes an additional layer of an anisotropic magnetic material whose axis of easy magnetization is parallel to the surface of the nonmagnetic substrate. An intermediate nonmagnetic, insulative coupling layer may be provided between the two layers. Another nonmagnetic sub-layer can be provided directly on the surface of the substrate to improve the adhesion of the additional layer to the substrate and to isolate it from the magnetic layer.

This prior art has suggested a perpendicular magnetization recording layer of a Co-Cr alloy which is deposited on a nonmagnetic substrate, usually consisting of a polymer film. These double layer perpendicular magnetic recording media have a high permeability magnetic thin film or layer of an Fe-Ni alloy as the in-plane magnetization layer between the nonmagnetic substrate and the perpendicular magnetization layer for increasing the recording and/or reproduction efficiency.

In the double layer perpendicular magnetic recording medium, the magnetic properties of the in-plane magnetization layer, i.e., the soft or high permeability thin magnetic layer, are critical. The Fe-Ni alloy film which is used as the high permeability magnetic film must be easily magnetized, that is, it must have a low coercive force Hc. Generally, it must be from 300—500 nm (0.3 to 0.5 microns) in thickness and must be capable of being produced by mass production techniques. If the coercive force Hc of the high permeability layer is high, the magnetic reluctance of the high permeability layer is increased so that the recording and reproducing efficiency of the resulting magnetic recording medium is lowered.

Fe-Ni alloys with a low coercive force Hc are known in the art, such as the composition consisting of 21.5 weight percent of Fe and 78.5 weight percent of Ni. It has been found experimentally that when such a film 390 nm (0.39 microns) in thickness is prepared, the coercive force Hc is increased to 1592—2380 A/m (20 to 30 oersteds) at a substrate temperature lower than 220°C and that for obtaining the film with a coercive force Hc less than 159 A/m (2 oersteds), it is necessary that the substrate temperature be adjusted to more than 260°C. The higher substrate temperature is not desirable since the plastic film used as a substrate must be extremely heat resistant, while the durability of the manufacturing apparatus is also lowered.

To overcome the aforementioned difficulties concerned with the film thickness, it has also been suggested to use a film structure composed of Fe-Ni layers and an interposed Ti film for lowering the coercive force. This method is not particularly preferred because three evaporation steps are required, and the provision of the nonmagnetic Ti layer tends to lower the magnetic characteristics.

For mass production, vacuum evaporation is preferred as a means of depositing high permeability magnetic thin film since a higher deposition speed can be obtained with vacuum evaporation than with sputtering. The deposition speed achieved with vacuum deposition is about 500 nm/sec (5000 Å/sec) which is about 30 times that achieved with, for example, a sputtering process which deposits at a rate of about 17 nm/sec (170 Å/sec).

A magnetic recording medium is disclosed in EP—A—0 089 609 comprising a ferromagnetic coating containing Co and Cr and optionally underlying layers of permalloy and Ti, each layer deposited on a high polymer material by vapor deposition at temperatures between 150—300°C.

Accordingly, one of the problems to be solved with a high permeability magnetic thin film used as the in-plane magnetic film is to lower the coercive force Hc while providing a process that is mass-producible.

Summary of the invention

The present invention seeks to meet the above described requirements and to provide a method for the preparation of a high permeability magnetic thin film having superior characteristics as a magnetic layer, including a low coercive force Hc and hence to provide a method for the preparation of a perpendicular recording medium which permits the production of such a medium with improved recording and/or reproducing efficiency.

The present inventors conducted research to determine possible causes for the high coercive force of an Fe-Ni film containing 21.5 weight percent of Fe and 78.5 weight percent of Ni, in order to develop a method for the preparation of an Fe-Ni film with reduced coercive force Hc.

It has now been found that, with the Fe-Ni film of the above composition, a striped magnetic domain is produced in the case of a film above a predetermined thickness due to the presence of magnetic anisotropy perpendicular to the film surface originated from magnetoelastic anisotropy, thus increasing the coercive force of the Fe-Ni film.

The magnetoelastic anisotropy K is related to the magnetostriction constant $\lambda$ and the internal stress $\sigma$ by the equation:

$$k = \frac{3}{2} \lambda \sigma \qquad\qquad (1)$$

In order to reduce the magnetoelastic anisotropy K and thus the coercive force, it is necessary to reduce the constant $\lambda$ and the stress $\sigma$. One of the methods of reducing the internal stress $\sigma$ is to elevate the substrate temperature. However, the high substrate temperature is not desirable for the reasons given above. On the other hand, the constant $\lambda$ depends on the alloy composition. Hence, one may expect to produce a film of lower coercive force by employing an Fe-Ni alloy material having a smaller magnetostriction constant $\lambda$.

The present invention is based upon the foregoing analysis and resides in a magnetic recording medium suitable for use in a single-pole type recording system utilizing a perpendicular magnetization mode comprising a nonmagnetic base of a material stable at a temperature of 220°C and higher, a low coercive force layer of an iron-nickel alloy vapor phase deposited on said nonmagnetic base at a temperature of said base of at least 220°C, and a magnetic recording layer overlying said low coercive force layer and having an easy axis of magnetization perpendicular to said nonmagnetic base, characterized in that the low coercive force layer of iron-nickel alloy contains 82 to 89.5 weight percent of nickel. Furthermore, the present invention provides a method for the production of the magnetic recording medium according to claim 1 characterized by vapor depositing an iron-nickel alloy containing 82 to 89.5 percent by weight of nickel.

By controlling the composition of the Fe-Ni alloy and the substrate temperature at the time of evaporation, an Fe-Ni alloy film with a low coercive force can be produced by a one-step operation.

It will thus be seen that the present invention provides an effective method for forming a high permeability magnetic thin layer with an extremely low coercive force Hc and thus producing a perpendicular magnetic recording medium with an improved recording and/or reproducing efficiency by adjustment of the Ni content of the Fe-Ni alloy and also adjusting the substrate temperature employed during evaporation of the high permeability magnetic thin film or layer.

The production efficiency is also improved by employing vacuum evaporation as the method of preparing the high permeability magnetic thin layer.

Brief description of the drawings

A further description of the present invention will be made in conjunction with the attached sheets of drawings in which:

Figure 1 is a plot of coercive force versus nickel content of the Fe-Ni alloy used in the high permeability magnetic thin layer;

Figure 2 is a plot of coercive force against substrate temperature at the time of evaporation;

Figure 3 is a plot of coercive force of the high permeability magnetic thin film against film thickness;

Figure 4 is a diagram showing the relation between the composition of the Fe-Ni alloy and the magnetostriction constant $\lambda$ obtained by experiment; and

Figure 5 is a diagram showing the relation between crystal magnetic anisotropy $K_1$ and the nickel content of the alloy.

Description of the preferred embodiments

According to the present invention, a substrate composed of a nonmagnetic material such as a temperature-resistant synthetic resin, a ceramic substrate, or a nonmagnetic alloy, is arranged for vacuum evaporation by providing an evaporation source such as an Fe-Ni alloy ingot and a heating means such as a heter or an electron gun for heating the source. The particularly preferred substrate is a polyimide resin which can resist temperatures in excess of 220°C and higher without losing its desirable physical properties.

The substrate is positioned opposite to the evaporation source. The source is heated by the heating means for depositing the alloy material and forming the high magnetic permeability film on the substrate surface.

The composition of the thin film of high permeability magnetic material and the substrate temperature at the time of deposition are critical, and it has been found that the coercive force can be lowered by adjusting these factors so as to be within predetermined ranges.

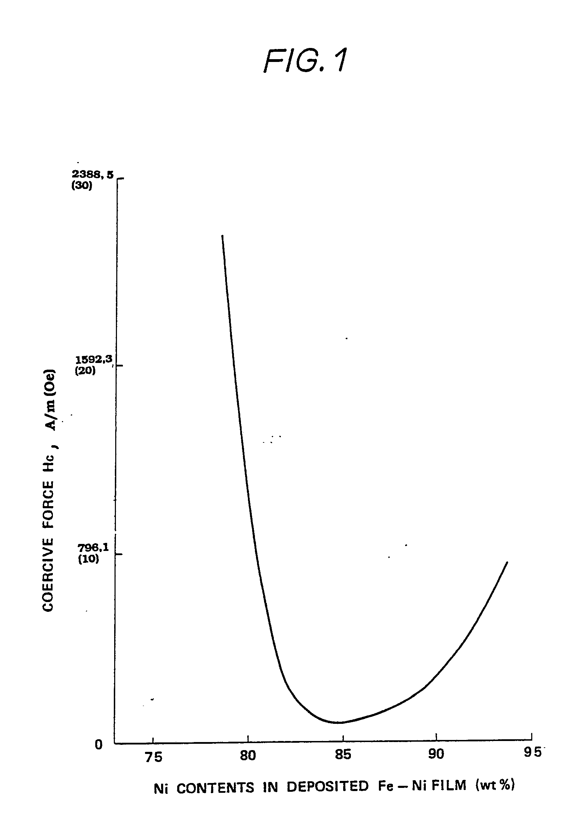

According to our experimental work, it has been found that by controlling the Ni content in the Fe-Ni alloy of the high permeability magnetic layer, the coercive force Hc of the resulting high permeability magnetic layer can be lowered markedly. Thus, a magnetic thin film or layer of high magnetic permeability material 390 nm (0.39 microns) thick was prepared with various Ni contents in the Fe-Ni alloy while the substrate temperature at the time of deposition was maintained at 220°C. The coercive force Hc of the resulting high permeability layer was less than 238,8 A/m (3 oersteds) for Ni contents in the range from 82.0 to 89.5 weight percent and less than 159,2 A/m (2 oersteds) for Ni contents in the range of 82.5 to 88.0 weight percent, as shown in Figure 1.

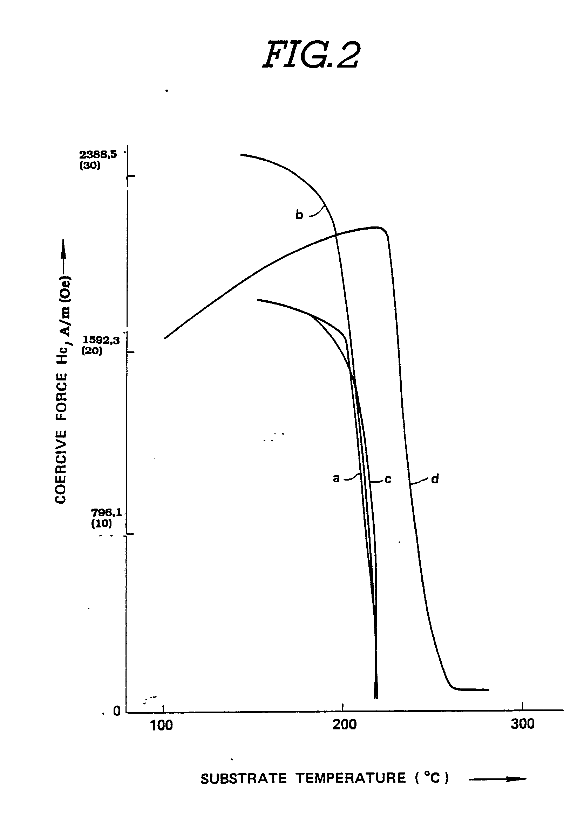

The coercive force Hc of the resulting high permeability magnetic thin film also becomes markedly lower by using an elevated substrate temperature at the time of deposition. High permeability magnetic thin film samples 390 nm (0.39 microns) thick were prepared with the use of an Fe-Ni alloy evaporation source having 18 weight percent Fe and 82 weight percent Ni resulting Fe-Ni alloy film having 83.3 weight percent Ni and 16.7 weight percent Fe, and utilizing various substrate temperatures in the range from 100° to 300°C. It was found, as shown by curve (a) in Figure 2, that the coercive force Hc of the resulting high permeability magnetic layer was markedly lower when the substrate temperature used was higher than 220°C, when it became less than 238,8 A/m (3 oersteds). Similarly, the coercive force Hc was rapidly lowered with an increase in the substrate temperature as shown by curve (b) in Figure 2 for an Fe-Ni alloy containing 15.5 weight percent of Fe and 84.5 weight percent of Ni, and by a curve (c) in Figure 2 for an Fe-Ni alloy containing 14 weight percent of Fe and 86 weight percent of Ni. In each case, the coercive force Hc could be lowered to less than 238,8 A/m (3 oersteds) by using a substrate temperature of 220°C or above.

When using an Fe-Ni alloy having an Fe content of 21.5 weight percent, and 78.5 weight percent Ni, the coercive force was lowered with an increase in the substrate temperature as shown by curve (d) in Figure 2. However, to lower the coercive force to below 238,8 A/m (3 oersteds), it was necessary to use a substrate temperature above 260°C.

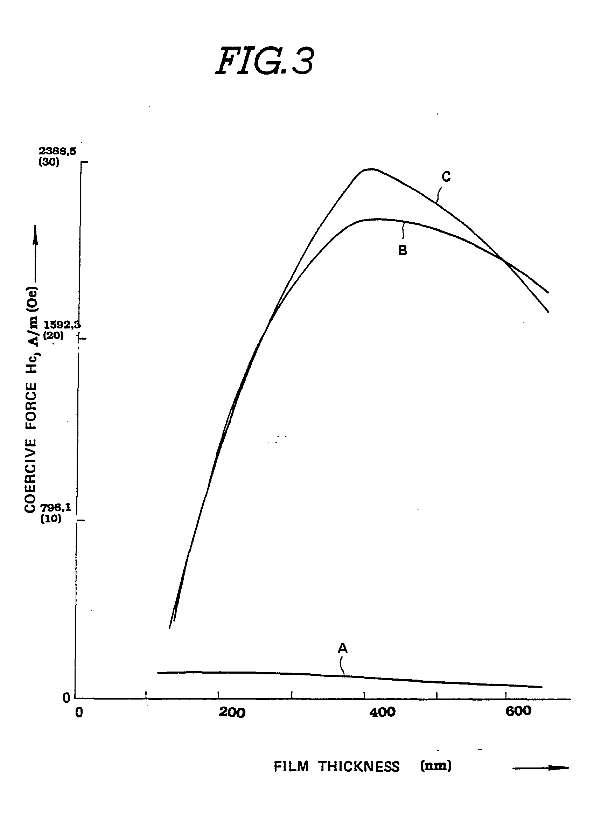

The coercive force Hc of the resulting high permeability magnetic film depends not only on nickel content and substrate temperature but on the film thickness, as shown in Figure 3. It has been found that, with a substrate temperature set, for example, at 260°C, the coercive force Hc is lowered gradually with an increase in film thickness as shown by curve A in Figure 3. With lower substrate temperatures, the coercive force Hc becomes maximum for a film thickness of 390 nm (0.39 microns) as shown by curve B in Figure 3 for a substrate temperature of 150°C and by a curve C in Figure 3 for a substrate temperature of 180°C. It is apparent that, by setting the substrate temperature to achieve the desired coercive force Hc at a film thickness of 390 nm (0.39 microns), as mentioned above, the coercive force Hc can be lowered sufficiently despite the difference in the film thickness.

It will be accordingly understood that by using an Fe-Ni alloy with a nickel content in the range from 82 to 89.5 weight percent, and adjusting the substrate temperature at the time of deposition so as to be at least 220°C, the coercive force Hc of the film can be controlled to a value of less than 238,8 A/m (3 oersteds).

After the deposition of the layer of high permeability magnetic material by vacuum evaporation, a Ti thin film can be applied as well as the perpendicular magnetization recording layer by sputtering or vacuum evaporation. The process of vacuum evaporation is the most preferred when considering production efficiency although sputtering can also be used.

The perpendicular magnetization recording layer is prepared by using methods or materials typically employed for this type of medium, for example, a Co-Cr alloy having 10 to 25 atomic percent of Cr with the balance being essentially Co. The result is the production of a perpendicular magnetization recording layer with an improved vertical orientation.

A thin film of Ti may be used for improving the properties of the perpendicular magnetization recording layer, if controlled to a film thickness of 10—50 nm (100 to 500 Å). With a Ti thin film less than 10 nm (100 Å), the thin film can be formed only with difficulty and hence the effect of the Ti thin film as a base coat can be lowered. The Ti thin film may occasionally be dispensed with.

The present invention may also be discussed in terms of the theoretically calculated magnetostriction constant, particularly the relationship between the magnetostriction constant λ and the composition for which the film of a low coercive force may be obtained.

The thin layer of high permeability magnetic material of the present invention is prepared in the form of an Fe-Ni alloy polycrystalline film. The magnetostriction constant of the polycrystalline film may be approximately calculated from the magnetostriction constant of the single crystal from the following equation:

$$\lambda = \frac{2}{5}\lambda_{100} + \frac{3}{5}\lambda_{100} \qquad (2)$$

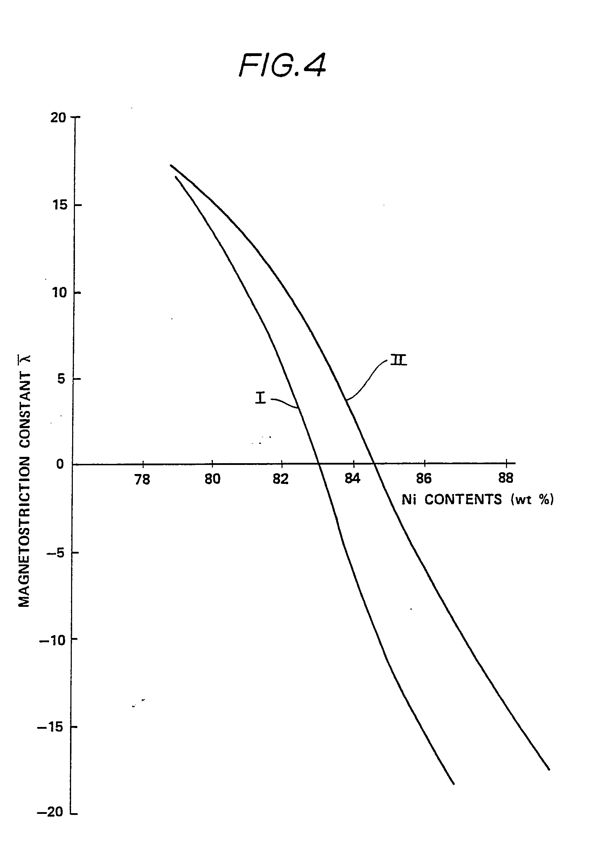

The value of magnetostriction constant $\lambda$ obtained by our experiments is shown in Figure 4. In this Figure, the curve I is a relation between the magnetostriction constant $\lambda$ and a Ni content of the evaporation source while the curve II is a relation between the magnetoresistance constant $\lambda$ and a Ni content of the resulting Fe-Ni alloy film.

It will be seen from Figure 4 that the composition range which gives a film of reduced coercive force Hc corresponds to a composition range with a smaller magnetostriction constant.

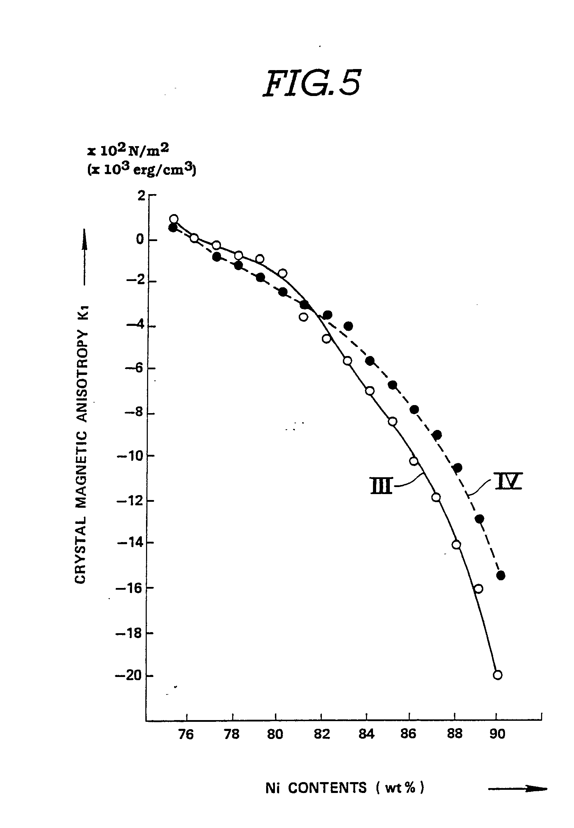

Figure 5 shows the composition dependency of the crystal magnetic anisotropy $K_1$. In Figure 5, the curve III is derived from the data of Phys. Rev., Volume 89 (1953), page 64 by R. M. Bozorth and J. G. Walker, whereas the curve IV is derived from the data of the Rev. Mod. Phys., Volume 25 (1953), page 42 by R. M. Bozorth.

It will be seen from Figure 5 that the crystal magnetic anisotropy is important with conventional Fe-Ni alloys, and there is preferably employed a composition with an Ni content of 78.5 weight percent so that the crystal magnetic anisotropy is nearly equal to zero.

The present invention will be explained more completely by reference to several specific examples. It should be noted, however, that these examples are given only for purposes of illustration and are not intended to limit the scope of the invention.

Example 1

A polyimide film 25000 nm (25 microns) in thickness was heated at 220°C by an infrared heater. On the film there was deposited an Fe-Ni alloy using an evaporation source having an Fe content of 17 weight percent and an Ni content of 83 weight percent under a vacuum of $2.66\times10^{-4}$ N/m$^2$ ($2.0\times10^{-6}$ Torr) with a deposition speed of 1.3 nm/sec (13 Å/sec) to give an Fe-Ni alloy film 350 nm (0.35 micron) thick having an Fe content of 15.5 weight percent and a Ni content of 84.5 weight percent.

A Ti film was evaporated to a thickness of 200 Å on the Fe-Ni alloy film under a vacuum of $2.66\times10^{-4}$ N/m$^2$ ($2.0\times10^{-6}$ Torr) and an evaporation rate of 1.4 nm/sec (14 Å/sec). On the Ti film there was further deposited a Co-Cr alloy film to a thickness of 120 nm (0.12 micron) under a vacuum of $2.66\times10^{-4}$ N/m$^2$ ($2.0\times10^{-6}$ Torr) and an evaporation rate of 2.4 nm/sec (24 Å/sec) to give a sample tape.

The coercive force Hc of the Fe-Ni film of the resulting sample tape was 71.6 A/m (0.9 oersted).

Comparative Example 1

The procedure of Example 1 was followed except that the polyimide film was heated to 200°C. The coercive force Hc of the Fe-Ni film of the resulting sample tape was 2308 A/m (29 oersteds).

Example 2

A polyimide film 25000 nm (25 microns) thick was heated to 220°C by an infrared heater. On the film there was deposited an Fe-Ni alloy using an evaporation source with an Fe content of 18 weight percent and an Ni content of 82 weight percent under a vacuum of $2.66\times10^{-4}$ N/m$^2$ ($2.0\times10^{-6}$ Torr) with an evaporation rate of 1.3 nm/sec (13 Å/sec) to give an Fe-Ni alloy film 350 nm (0.35 micron) thick having an Fe content of 16.7 weight percent and a Ni content of 83.3 weight percent.

A Ti film was then evaporated to a thickness of 20 nm (200 Å) on the Fe-Ni alloy film under a vacuum of $2.66\times10^{-4}$ N/m$^2$ ($2.0\times10^{-6}$ Torr) and an evaporation rate of 1.4 nm/sec (14 Å/sec). On the Ti film there was further deposited a Co-Cr alloy film having a thickness of 120 nm (0.12 micron) under a vacuum of $2.66\times10^{-4}$ N/m$^2$ ($2.0\times10^{-6}$ Torr) with an evaporation rate of 2.4 nm/sec (24 Å/sec) to give a sample tape.

The coercive force Hc of the Fe-Ni alloy film of the resulting sample tape amounted to 103.5 A/m (1.3 oersted).

Example 3

A polyimide film 25000 nm (25 microns) in thickness was heated to 220°C by an infrared heater. On the film there was deposited an Fe-Ni alloy using an evaporation source with an Fe content of 14 weight percent and an Ni content of 86 weight percent under a vacuum of $2.66\times10^{-4}$ N/m$^2$ ($2.0\times10^{-6}$ Torr) and an evaporation rate of 1.3 nm/sec (13 Å/sec) to give an Fe-Ni alloy film 350 nm (0.35 micron) thick having an Fe content of 11 weight percent and a Ni content of 89 weight percent.

A Ti film was then deposited to a thickness of 20 nm (200 Å) on the Fe-Ni alloy film under a vacuum of $2.66\times10^{-4}$ N/m$^2$ ($2.0\times10^{-6}$ Torr) with an evaporation rate of 1.4 nm/sec (14 Å/sec). On the Ti film there was further deposited a Co-Cr alloy film to a thickness of 120 nm (0.12 micron) under a vacuum of $2.66\times10^{-4}$ N/m$^2$ ($2.0\times10^{-6}$ Torr) and an evaporation rate of 2.4 nm/sec (24 Å/sec) to yield a sample tape.

The coercive force of the Fe-Ni alloy film of the resulting sample tape amounted to 215 A/m (2.7 oersteds).

Comparative Example 2

The procedure of preceding Example 3 was repeated except that an Fe-Ni alloy having a content of 21.5 weight percent Fe and 78.5 weight percent Ni was used.

The coercive force Hc of the Fe-Ni alloy film of the resulting sample tape amounted to 2150 A/m (27 oersteds).

Comparative Example 3

The procedure of preceding Example 3 was followed except that the Fe-Ni alloy evaporation source had an Fe content of 12 weight percent and a Ni content of 88 weight percent resulting an Fe-Ni alloy film having an Fe content of 8.5 weight percent and a Ni content of 91.5 weight percent.

The coercive force Hc of the Fe-Ni alloy film of the resulting sample tape amounted to 652.7 A/m (8.2 oersteds).

It will thus be seen from the above Examples that the coercive force Hc can be markedly lowered by employing the improvements of the present invention.

It will also be evident that various modifications can be made to the described embodiments without departing from the scope of the present invention.

## Claims

1. A magnetic recording medium suitable for use in a single-pole type recording system utilizing a perpendicular magnetization mode comprising a nonmagnetic base of a material stable at a temperature of 220°C and higher, a low coercive force layer of an iron-nickel alloy vapor phase deposited on said nonmagnetic base at a temperature of said base of at least 220°C, and a magnetic recording layer overlying said low coercive force layer and having an easy axis of magnetization perpendicular to said nonmagnetic base, characterized in that the low coercive force layer of iron-nickel alloy contains 82 to 89.5 weight percent of nickel.

2. A magnetic recording medium according to claim 1 wherein said low coercive force layer has a coercive force not in excess of 398,0 A/m (5 oersteds).

3. A magnetic recording medium according to claim 1 which includes a layer of Ti between said low coercive force layer and said magnetic recording layer.

4. A magnetic recording medium according to claim 3 wherein said layer of Ti has a thickness between 10 and 50 nm (100 and 500 Å).

5. A magnetic recording medium according to claim 1 wherein said nonmagnetic base is a polyimide resin.

6. A magnetic recording medium according to claim 1 wherein said nonmagnetic base is a ceramic material.

7. A magnetic recording medium according to claim 1 wherein said nonmagnetic base is a nonmagnetic alloy.

8. A method for the production of the magnetic recording medium according to claim 1 wherein a low coercive force iron-nickel alloy is vapor deposited onto a nonmagnetic substrate at a temperature of the substrate of at least 220°C followed by the application of a magnetic recording layer thereover, characterized by vapor depositing an iron-nickel alloy containing 82 to 89.5 percent by weight of nickel.

9. The method of claim 8 wherein said depositing takes place under vacuum conditions.

10. The method of claim 8 wherein said nonmagnetic base is composed of a polyimide resin.

11. The method of claim 8 wherein said nonmagnetic base is composed of a ceramic material.

12. The method of claim 8 wherein said nonmagnetic base is a nonmagnetic alloy.

13. The method of claim 8 which includes the step of depositing a film of Ti over said low coercive force film.

14. A method according to claim 13 wherein the thickness of said film of Ti is in the range of from 10 to 50 nm (100 to 500 Å).

## Patentansprüche

1. Magnetisches Aufzeichnungsmedium für den Gebrauch in einem Aufzeichnungssystem des Ein-Pol-Typs unter Anwendung eines senkrechten Magnetisierungsmodus, umfassend einen nichtmagnetischen Träger aus einem Material, das bei einer Temperatur von 220°C und höher stabil ist, eine auf den nichtmagnetischen Träger bei einer Trägertemperatur von mindestens 220°C aus der Dampfphase abgeschiedene Schicht aus einer Eisen-Nickel-Legierung mit einer niedrigen Koerzitivkraft, und eine über der Schicht mit der niedrigen Koerzitivkraft angeordnete, magnetische Aufzeichnungsschicht mit einer magnetischen Vorzugsrichtung senkrecht zu dem nichtmagnetischen Träger, dadurch gekennzeichnet, daß die Schicht aus der Eisen-Nickel-Legierung mit der niedrigen Koerzitivkraft 82 bis 89,5 Gew.-% Nickel enthält.

2. Magnetisches Aufzeichnungsmedium nach Anspruch 1, worin die Schicht mit der niedrigen Koerzitivkraft eine Koerzitivkraft von nicht mehr als 398,0 A/m (5 Oersted) aufweist.

3. Magnetisches Aufzeichnungsmedium nach Anspruch 1, welches zwischen der Schicht mit der niedrigen Koerzitivkraft und der magnetischen Aufzeichnungsschicht eine Schicht aus Ti aufweist.

4. Magnetisches Aufzeichnungsmedium nach Anspruch 3, worin die Schicht aus Ti eine Dicke zwischen 10 und 50 nm (100 und 500 Å) aufweist.

5. Magnetisches Aufzeichnungsmedium nach Anspruch 1, worin der nichtmagnetische Träger ein Polyimidharz ist.

6. Magnetisches Aufzeichnungsmedium nach Anspruch 1, worin der nichtmagnetische Träger ein Keramikmaterial ist.

7. Magnetisches Aufzeichnungsmedium nach Anspruch 1, worin der nichtmagnetische Träger eine nichtmagnetische Legierung ist.

8. Verfahren zur Herstellung des magnetischen Aufzeichungsmediums nach Anspruch 1, worin die Schicht aus der Eisen-Nickel-Legierung mit der niedrigen Koerzitivkraft bei einer Substrattemperatur von mindestens 220°C auf ein nichtmagnetisches Substrat aufgedampft und anschließend eine magnetische Aufzeichnungsschicht darauf ausgebildet werden, gekennzeichnet durch das Aufdampfen einer Eisen-Nickel-Legierung, die 82 bis 89,5 Gew.-% Nickel enthält.

9. Verfahren nach Anspruch 8, worin das Abscheiden im Vakuum durchgeführt wird.

10. Verfahren nach Anspruch 8, worin der nichtmagnetische Träger aus einem Polyimidharz gebildet wird.

11. Verfahren nach Anspruch 8, worin der nichtmagnetische Träger aus einem Keramikmaterial gebildet wird.

12. Verfahren nach Anspruch 8, worin der nichtmagnetische Träger eine nichtmagnetische Legierung ist.

13. Verfahren nach Anspruch 8, mit dem zusätzlichen Schritt des Abscheidens einer Schicht aus Ti auf die Schicht mit der niedrigen Koerzitivkraft.

14. Verfahren nach Anspruch 13, worin die Dicke der Schicht aus Ti in einem Bereich von 10 bis 50 nm (100 bis 500 Å) liegt.

**Revendications**

1. Un milieu d'enregistrement magnétique utilisable dans un système d'enregistrement du type à pôle unique utilisant un mode de magnétisation perpendiculaire, comprenant un support non magnétique en un matériau stable à une température de 220°C et plus, une couche à faible champ coercitif en un alliage de fer-nickel déposé en phase vapeur sur ledit support non magnétique à une température dudit support d'au moins 220°C, et une couche d'enregistrement magnétique superposée à ladite couche à faible champ coercitif et ayant un axe de magnétisation facile perpendiculaire audit support non magnétique, caractérisé en ce que la couche à faible champ coercitif en alliage de fer-nickel contient 82 à 89,5% en poids de nickel.

2. Un milieu d'enregistrement magnétique selon la revendication 1, selon laquelle ladite couche à faible champ coercitif a un champ coercitif ne dépassant pas 398,0 A/m.

3. Un milieu d'enregistrement magnétique selon la revendication 1 qui inclut une couche de Ti entre ladite couche à faible champ coercitif et ladite couche d'enregistrement magnétique.

4. Un milieu d'enregistrement magnétique selon la revendication 3, selon laquelle ladite couche de Ti a une épaisseur comprise entre 10 et 50 nm.

5. Un milieu d'enregistrement magnétique selon la revendication 1, selon laquelle ledit support non magnétique est une résine de polyimide.

6. Un milieu d'enregistrement magnétique selon la revendication 1, selon laquelle ledit support non magnétique est un matériau céramique.

7. Un milieu d'enregistrement magnétique selon la revendication 1, selon laquelle ledit support non magnétique est un alliage non magnétique.

8. Une méthode de production du milieu d'enregistrement magnétique selon la revendication 1 selon laquelle un alliage de fer-nickel à faible champ coercitif est déposé en phase vapeur sur un substrat non magnétique à une température du substrat d'au moins 220°C et ensuite une couche d'enregistrement magnétique est appliquée par dessus, caractérisée par le dépôt en phase vapeur d'un alliage de fer-nickel contenant 82 à 89,5% en poids de nickel.

9. La méthode selon la revendication 8 selon laquelle ledit dépôt a lieu sous vide.

10. La méthode selon la revendication 8 selon laquelle ledit support non magnétique est composé de résine de polyimide.

11. La méthode selon la revendication 8 selon laquelle ledit support non magnétique est composé d'un matériau céramique.

12. La méthode selon la revendication 8 selon laquelle ledit support non magnétique est un alliage non magnétique.

13. La méthode selon la revendication 8 qui inclut l'étape de dépôt d'un film de Ti sur ledit film à faible champ coercitif.

14. Une méthode selon la revendication 13 selon laquelle l'épaisseur dudit film de Ti est comprise dans l'intervalle de 10 à 50 nm.

# FIG. 1

# FIG.2

# FIG.3

# FIG.4

# FIG.5